# FASCICULE DE BREVET EUROPEEN

(11) **EP 1 370 504 B1**
(45) Date de publication et mention de la délivrance du brevet: **17.11.2010**
(21) Numéro de dépôt: 02716879.8
(22) Date de dépôt: 07.03.2002
(51) Int. Cl.: C04B 40/02, C04B 28/14

(54) **PROCEDE DE FABRICATION D'ELEMENTS DE CONSTRUCTION**
VERFAHREN ZUR HERSTELLUNG VON BAUELEMENTEN
METHOD FOR MAKING BUILDING ELEMENTS

(30) Priorité: 08.03.2001 FR 0103350
(43) Date de publication de la demande: 17.12.2003
(73) Titulaire: Serras, Edouard, 92200 Neuilly-sur-Seine (FR)
(72) Inventeur: GAILLARD, Jean-Marie, 87100 Limoges (FR); SERRAS, Edouard, 92200 Neuilly-sur-Seine (FR)
(74) Mandataire: Ramey, Daniel
(86) Numéro de dépôt international: PCT/FR2002/000831
(87) Numéro de publication internationale: WO 2002/070435

(56) Documents cités:
- EP-A- 0 395 165
- WO-A-96/38394
- GB-A- 1 450 246
- US-A- 1 703 097
- US-A- 3 809 566

## Description

L'invention concerne un procédé de fabrication d'éléments de construction à partir d'un mélange de plâtre, d'eau et éventuellement d'une charge granulaire.

On connaît, notamment par EP - A - 0 290 571 et EP - A - 0 619 773, un procédé de ce type, qui consiste pour l'essentiel à placer un mélange de plâtre, de sable et d'eau dans un moule à la forme de l'élément à fabriquer, à tasser ce mélange dans le moule et à s'opposer ensuite à une augmentation de volume dans le moule pendant la prise du plâtre. L'expansion volumique du plâtre qui se produit pendant son hydratation et sa cristallisation est ainsi contrariée, ce qui se traduit par une densification du réseau cristallin du plâtre dans l'élément fabriqué. Ces éléments moulés sont utilisables en construction à leur démoulage, ils ont des propriétés mécaniques et physiques équivalentes à celles des pierres de construction, ils peuvent être assemblés sans joints en raison de leur précision dimensionnelle, et ils ont l'aspect d'une pierre de taille, ce qui rend superflu tout enduit de revêtement extérieur.

Un inconvénient de ce procédé connu est que l'expansion contrariée du plâtre dans le moule se traduit par une augmentation importante de pression dans le moule. Comme le démoulage de l'élément est réalisé par déplacement d'un des plateaux du moule entre les parois latérales du moule qui sont assemblées fixement entre elles, la force qu'il faut appliquer au plateau du moule pour le démoulage doit surmonter le frottement résultant de la pression:de l'élément sur les parois latérales du moule, et est très importante. Il faut donc, pour mettre en oeuvre ce procédé connu, utiliser des presses très puissantes, qui sont très lourdes et très coûteuses. A défaut, il devient impossible de sortir les éléments des moules sans les détruire.

En outre, comme la prise du plâtre se produit au moins en majeure partie dans le moule, chaque moule est immobilisé pendant un temps relativement long avant le démoulage, ce qui ralentit beaucoup la cadence de fabrication et oblige à utiliser un grand nombre de moules, ce qui est coûteux.

Les documents US-A-3 809 566, US-A-1 703 097 et GB-A-1450 246 décrivent des procédés dans lesquels un mélange de plâtre et d'eau est comprimé dans un moule, le mélange contenant une quantité d'eau approximativement égale ou inférieure à celle qui est nécessaire à la cristallisation du plâtre. Ces procédés présentent les mêmes inconvénients que le procédé décrit ci-dessus.

L'invention a pour objet un procédé permettant d'éviter ces inconvénients de la technique connue.

Elle a également pour objet un procédé permettant de fabriquer des éléments du type précité, ayant des propriétés physiques et mécaniques égales ou supérieures à celles des éléments réalisés avec le procédé connu.

Elle propose à cet effet un procédé :de fabrication d'un élément de construction à base ;de plâtre, ce procédé consistant à placer au moins du plâtre et de l'eau dans un moule à la forme de l'élément à obtenir, à comprimer le mélange de plâtre et d'eau dans le moule et à démouler l'élément contenu, **caractérisé en ce que** la quantité d'eau dans le mélange est sensiblement égale au double de:la quantité d'eau nécessaire à la cristallisation du plâtre à la pression atmosphérique et la pression appliquée au mélange dans le moule est au moins égale à une valeur seuil à partir de laquelle on empêche la cristallisation du plâtre, le procédé consistant ensuite à provoquer la cristallisation rapide du plâtre par diminution de la pression appliquée au mélange.

Dans un mode de réalisation préféré de l'invention, on provoque la cristallisation du plâtre par démoulage de l'élément résultant de la compression du mélange dans le moule, et on laisse s'opérer la cristallisation du plâtre dans l'élément à l'extérieur du moule.

On a en effet constaté que, quand un mélange de plâtre et d'eau est soumis à une pression supérieure à une certaine valeur limite, la solubilité du plâtre dans l'eau augmente. Si l'on prépare un mélange de plâtre et d'eau dans des proportions correspondant sensiblement aux valeurs stoechiométriques de la réaction d'hydratation et de cristallisation du plâtre, et si on laisse s'opérer cette cristallisation à la pression atmosphérique, on constate une expansion volumique du plâtre et un échauffement dû au dégagement de chaleur de la réaction exothermique de cristallisation. Quand on soumet ce mélange de plâtre et d'eau pendant plusieurs minutes à une pression supérieure à la pression atmosphérique, mais inférieure à une certaine valeur seuil, qui est comprise entre 100 et 150 bars environ à la température ambiante pour un plâtre déterminé, on n'empêche pas la cristallisation du plâtre, mais on contrarie son expansion volumique, ce qui se traduit par une densification du réseau cristallin du plâtre et par une augmentation notable des qualités mécaniques et physiques de l'élément obtenu. Si on soumet un mélange de plâtre et d'eau à une pression supérieure à la valeur seuil précitée, on empêche la cristallisation du plâtre, dont la solubilité dans l'eau a augmenté, à condition que le mélange contienne une quantité d'eau suffisante pour assurer la dissolution du plâtre sous pression, sans saturation de la solution. Si, ensuite, on diminue la pression appliquée au mélange de plâtre et d'eau, la solubilité du plâtre diminue, ce qui provoque sa cristallisation très rapide.

On a notamment constaté qu'en comprimant un mélange de plâtre et d'eau dans des proportions de 35 à 40% en poids d'eau pour 100% en poids de plâtre à une pression de 150 bars environ dans un moule à température ambiante (environ 20°C) et en démoulant ensuite rapidement l'élément moulé, la cristallisation du plâtre s'opère dans l'élément de façon extrêmement rapide.

Dans ce procédé, le démoulage de l'élément est facile et rapide, puisqu'aucune expansion du plâtre n'a eu lieu dans le moule.

En variante, on peut comprimer le mélange précité de plâtre et d'eau dans le moule à une pression de l'ordre de 150 bars, puis cesser l'application de cette pression et laisser la cristallisation du plâtre se faire à l'intérieur du moule. Il faut toutefois dans ce cas disposer de moyens plus puissants pour extraire l'élément hors du moule après la cristallisation du plâtre.

De préférence, le mélange comprimé dans le moule comprend une charge, par exemple granulaire.

Celle-ci peut être d'un type quelconque et chimiquement inerte vis-à-vis du plâtre.

On peut notamment utiliser une charge légère, ayant une densité voisine de 1 par exemple, pour la fabrication d'éléments légers et résistants, notamment des carreaux, cette charge pouvant être poreuse.

On peut aussi utiliser du sable d'un type quelconque, des débris de construction qui ont été broyés, des matériaux de récupération broyés, etc.

On peut également utiliser une charge qui n'est pas chimiquement inerte vis-à-vis du plâtre, telle par exemple que des carbonates, des phosphates, etc.

On peut également ajouter au plâtre dans le mélange du gypse de récupération (phosphogypse, sulfogypse, borogypse, etc.).

Selon une autre caractéristique de l'invention, on ajoute au mélange précité un fluidifiant, et notamment un produit défloculant, tel que la mélamine.

Cela permet de diminuer à une valeur minimum la quantité d'eau nécessaire dans le mélange, tout en conservant une fluidité suffisante du mélange pour sa compression homogène dans le moule. L'intérêt de diminuer la quantité d'eau dans le mélange est de réduire la porosité finale de l'élément fabriqué.

Selon encore une autre caractéristique de l'invention, le procédé consiste à comprimer initialement le mélange précité dans le moule pour réduire les vides dans le mélange à une valeur minimale ou voisine d'un minimum, puis à augmenter la pression appliquée au mélange au moins jusqu'à la valeur seuil précitée.

Pour augmenter cette pression, l'invention prévoit avantageusement d'enfoncer dans le mélange, à l'intérieur du moule, au moins un élément ayant une section transversale réduite par rapport à la section transversale correspondante de la cavité de moulage dans le moule. On peut ainsi augmenter la pression dans le moule tout en exerçant une force relativement faible sur l'extrémité de l'élément.

De préférence, on utilise plusieurs éléments précités, qui sont par exemple des tiges cylindriques guidées en translation à étanchéité dans des orifices d'une ou de plusieurs parois du moule et auxquelles on applique des poussées axiales.

On peut bien entendu utiliser tout autre moyen approprié et connu de l'homme du métier pour augmenter la pression à l'intérieur du moule au-dessus de la valeur seuil précitée à partir de laquelle on augmente la solubilité du plâtre dans l'eau, ces moyens étant tels par exemple que des multiplicateurs de pression, des systèmes de leviers, des systèmes à genouillères, etc., du type utilisé notamment dans les presses hydrauliques.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe transversale d'un dispositif de fabrication d'un élément de construction selon l'invention ;
- la figure 2 est une vue schématique en coupe axiale du dispositif de la figure 1 ;
- la figure 3 est un organigramme des principales étapes du procédé selon l'invention.

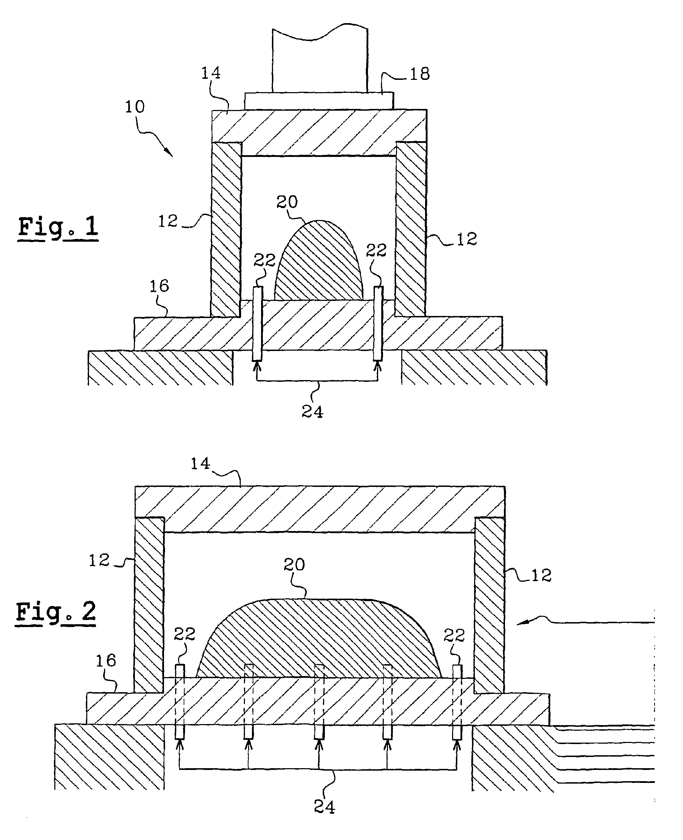

Dans l'exemple de réalisation des figures 1 et 2, la référence 10 désigne un moule de fabrication d'un élément de construction selon l'invention, ce moule étant de forme parallélépipédique rectangle et comprenant quatre parois latérales 12 rigides et indéformables, reliées fixement entre elles, ainsi qu'un plateau supérieur 14 et un plateau inférieur 16 qui sont montés mobiles par rapport aux parois latérales 12.

Le plateau inférieur 16 repose sur la table d'une presse hydraulique tandis que le plateau supérieur 14 est associé au plateau mobile de la presse de façon à pouvoir exercer un effort de compression sur un mélange placé à l'intérieur du moule 10.

Eventuellement, et comme représenté schématiquement, le plateau inférieur 16 peut porter une pièce en saillie 20, par exemple de forme semi-ovoïde, destinée à former une cavité dans l'élément à fabriquer.

Le mélange destiné à être introduit dans le moule 10 comprend du plâtre et une quantité minimale d'eau, correspondant sensiblement au double de la quantité d'eau nécessaire à la réaction d'hydratation et de cristallisation du plâtre à la pression atmosphérique.

De façon bien connue, le plâtre est un semi-hydrate de sulfate de calcium, obtenu par cuisson du gypse qui est un dihydrate de sulfate de calcium. Le plâtre couramment disponible dans le commerce comprend un certain nombre d'adjuvants, et notamment des retardateurs de prise. Toutefois, dans le procédé selon l'invention, on peut aussi bien utiliser du plâtre pur, sans adjuvant, ou du plâtre de médiocre qualité, contenant des incuits qui forment des accélérateurs de prise.

Le mélange introduit dans le moule 10 comprend également, de préférence, une charge granulaire telle que du sable par exemple, ou tout autre type de charge inerte ou chimiquement compatible vis-à-vis du plâtre, comme indiqué plus haut. La quantité de charge dans le mélange peut varier assez largement, ainsi que la granulométrie de la charge. Par exemple, le mélange introduit dans le moule peut comprendre de 30 à 50 % en poids environ de plâtre pour 70 à 50 % en poids environ de charge. La quantité d'eau dans ce mélange dépend de la température et de la valeur seuil de la compression et est d'environ 35 à 40 ou même 45 parts en poids pour 100 parts en poids de plâtre dans la plupart des cas. Bien entendu, ces valeurs sont données uniquement à titre d'exemple, pour fixer les idées, et peuvent varier assez largement, en fonction de la température et de la compression du mélange dans le moule. Dans un exemple préféré de réalisation de l'invention, le mélange contient 37 parts en poids d'eau pour 100 parts en poids de plâtre, et est comprimé à une pression de 150 bars quand la température est de 20°C à 25°C.

Pour la fabrication d'un élément de construction selon l'invention, on procède de la façon suivante :
Le plateau supérieur 14 du moule étant retiré, on verse dans le moule monté sur la presse un mélange de plâtre, de charge et d'eau dans les proportions indiquées ci-dessus. De préférence, le plâtre et la charge sont mélangés à sec et l'eau d'hydratation du plâtre est ajoutée au dernier moment, par exemple à l'introduction du mélange dans le moule 10 ou juste avant.

L'étape suivante consiste à tasser ce mélange dans le moule pour éliminer autant que possible l'air contenu dans ce mélange et un éventuel excès d'eau, qui peuvent s'échapper par des jeux de quelques centièmes à quelques dixièmes de millimètres entre les parois latérales 12 et les plateaux 14 et 16 du moule. Le mélange tassé dans le moule est comprimé par exemple par descente du plateau supérieur 14 du moule, jusqu'à une hauteur prédéterminée correspondant sensiblement à la hauteur désirée de l'élément de construction à fabriquer. Cette hauteur est avantageusement définie par butée du plateau 14 sur les parois latérales 12 du moule.

La pression appliquée au mélange de plâtre de charge et d'eau dans le moule est ensuite augmentée jusqu'à une valeur seuil à partir de laquelle le plâtre est dissous dans l'eau. Cette valeur limite dépend de la température et aussi du plâtre utilisé, et est par exemple d'environ 100 bars à 15°C, d'environ 150 bars à 20-25°C, et de 170-180 bars à 40°C. Il suffit de comprimer le mélange dans le moule à une pression légèrement supérieure à cette valeur seuil, et l'application d'une pression très supérieure (par exemple le double de la valeur seuil) ne modifie que faiblement le résultat final.

La conséquence de cette compression du mélange dans le moule et de l'augmentation de la solubilité du plâtre est que la prise du plâtre est bloquée et qu'il ne se produit aucune cristallisation du plâtre dans le mélange. Le phénomène peut s'expliquer de la façon suivante : la cristallisation du plâtre ne se produit qu'après dissolution du plâtre dans l'eau et saturation de la solution formée par le plâtre et l'eau, pour que puisse débuter un processus de germination croissance du dihydrate de sulfate de calcium. La compression du mélange dans le moule au-dessus de la valeur seuil précitée a pour effet d'augmenter la solubilité du plâtre dans l'eau et donc de ne pas permettre une saturation de la solution qui déclencherait la germination croissance précitée. Cette compression est exercée pendant une durée suffisante, par exemple environ 10 à 15 secondes pour que l'air et l'eau en excès dans le mélange soient évacués hors du moule. Par diminution ou fin de cette compression, on revient à un état où, la solubilité du plâtre dans l'eau étant plus faible, la solution se trouve alors saturée ce qui déclenche une germination croissance brusque et une cristallisation rapide du plâtre dans le mélange, sous forme de petits cristaux compacts d'une taille nettement inférieure à celle des cristaux obtenus lors d'une cristallisation à la pression atmosphérique.

Selon l'invention, cette diminution de pression est avantageusement réalisée par démoulage de l'élément de construction. Ce démoulage a lieu lorsque le plâtre n'a pas encore fait sa prise et est rendu possible parce que la compression élevée du mélange dans le moule produit un élément solide. Le démoulage s'effectue facilement, par exemple par soulèvement du plateau supérieur et aussi des parois latérales 12 du moule, par translation verticale. La cristallisation du plâtre dans l'élément démoulé se produit rapidement, et a une durée qui est typiquement de quelques minutes et est deux à trois fois plus courte que la durée de cristallisation du plâtre à la pression atmosphérique dans un mélange aux proportions stoechiométriques.

Les éléments ainsi fabriqués ont des propriétés mécaniques et physiques qui sont comparables ou supérieures à celles des pierres de taille utilisées en construction. En particulier, la résistance en compression d'un élément selon l'invention est supérieure à 300 kg/cm2.

Ces éléments peuvent être utilisés en construction quelques minutes après leur démoulage. Leur précision dimensionnelle permet de les monter en les empilant les uns sur les autres, sans joint et sans enduit de revêtement extérieur, comme dans la technique antérieure précitée.

Pour diminuer la porosité de ces éléments et améliorer leur tenue à l'eau et au gel, le mélange introduit dans le moule contient une quantité minimale d'eau et une faible quantité d'un agent fluidifiant, par exemple d'un défloculant. Avantageusement, ce défloculant est la mélamine, dans une quantité inférieure à 0,5 % en poids par rapport au plâtre.

La présence de cet agent fluidifiant permet de réduire au minimum la quantité d'eau dans le mélange tout en conservant une fluidité suffisante du mélange pour sa compression sensiblement homogène et isostatique dans le moule.

Les moyens utilisés pour l'exécution du procédé selon l'invention peuvent comprendre une presse hydraulique d'un type classique, ayant une puissance suffisante pour comprimer le mélange dans le moule à une pression d'au moins 150 bars.

On peut également utiliser des moyens moins puissants, permettant par exemple de comprimer le mélange dans le moule à une pression de l'ordre de 80 bars, en les associant à d'autres moyens, tels que ceux représentés en figures 1 et 2, qui permettent d'augmenter la pression dans le moule à une valeur de 140 à 150 bars environ en utilisant une puissance hydraulique relativement faible.

Les moyens représentés aux figures 1 et 2 comprennent des tiges cylindriques 22, qui sont montées en translation de façon étanche dans des orifices du plateau inférieur 16 du moule et qui sont associées à des moyens de poussée pour être introduites au moins en partie dans le mélange comprimé dans le moule.

On procède alors de la façon suivante :

Les tiges 22 étant rétractées et ne faisant pas saillie à l'intérieur du moule, on verse une quantité voulue du mélange précité dans le moule, on le tasse et on le comprime jusqu'à 80 bars environ au moyen du plateau supérieur 14 du moule. Ensuite, on exerce une poussée sur les extrémités inférieures des tiges 22 pour les enfoncer au moins partiellement dans le mélange comprimé dans le moule.

Cet enfoncement des tiges 22 dans le mélange permet d'augmenter la pression de ce mélange à une valeur de 150 bars environ en utilisant une force de poussée beaucoup plus faible que si cette pression interne était obtenue par déplacement du plateau supérieur 14 du moule.

Cet enfoncement des tiges 22 dans le mélange a également pour effet de compenser les petites erreurs de dosage du mélange qui peuvent se produire dans la pratique. Par exemple, si la quantité de mélange introduite dans le moule est légèrement inférieure à la valeur théorique, les tiges 22 seront enfoncées plus profondément dans le mélange pour produire une pression interne de 150 bars environ. Inversement, si la quantité de mélange introduite dans le moule est légèrement supérieure à la valeur théorique, la pression interne de 150 bars dans le moule sera atteinte pour un enfoncement plus faible des tiges 22.

Bien entendu, ces tiges peuvent être montées dans des orifices du plateau supérieur 14 du moule et/ou des petites parois latérales 12 du moule.

Pour faciliter le démoulage, on peut utiliser un moule du type ouvrant, c'est-à-dire dont les parois latérales 12 ne sont pas reliées fixement entre elles et peuvent s'écarter les unes des autres. Dans ce cas, on procède de la façon suivante :
Les parois latérales 12 du moule étant rapprochées les unes des autres aux cotes de l'élément à fabriquer et étant bloquées en position, on procède comme indiqué plus haut, en introduisant le mélange dans le moule, en le tassant et en le comprimant jusqu'à 150 bars environ. Ensuite, pour le démoulage, on retire le plateau supérieur 14 du moule et on écarte latéralement les parois 12 les unes des autres. Les moyens de déplacement des parois 12 et de blocage de ces parois en position peuvent être mécaniques ou hydrauliques.

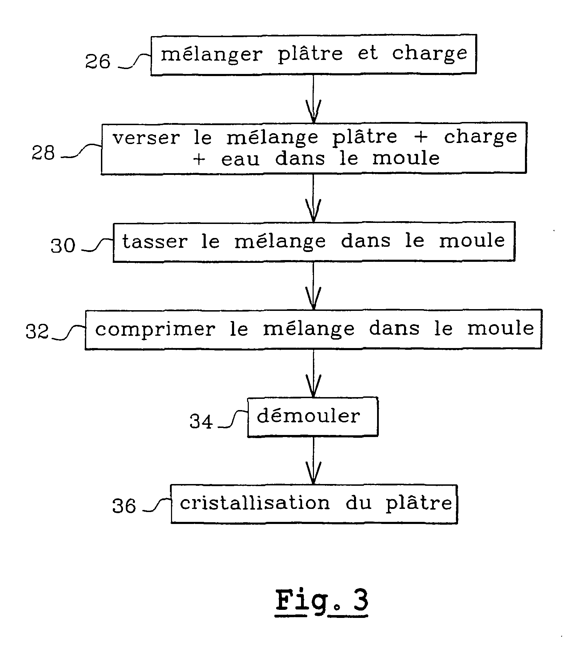

Les principales étapes du procédé selon l'invention ont été représentées schématiquement dans l'organigramme de la figure 3.

On retrouve dans cet organigramme une étape 26 de mélange à sec du plâtre et de la charge, une étape 28 d'introduction du mélange de plâtre, de charge et d'eau dans le moule 10, une étape 30 de tassement du mélange dans le moule, une étape 32 de compression du mélange dans le moule à une pression par exemple de l'ordre de 150 bars, une étape 34 de démoulage de l'élément ainsi obtenu et une étape finale 36 où on laisse s'opérer la cristallisation du plâtre à l'air libre.

La durée de l'étape 30 est de 10 à 15 secondes, et celle de l'étape 32 de 20 à 30 secondes par exemple, l'augmentation progressive de la pression entre les étapes 30 et 32 permettant une bonne mise en place des constituants du mélange. La pression est maintenue à la valeur limite, ici 150 bars, pendant 10 à 15 secondes environ, puis est annulée pour le démoulage, l'étape 34 ayant une durée d'environ 15 secondes. La durée totale des étapes de compression et de démoulage est d'environ 60 secondes, ce qui donne la cadence de fabrication par presse et par moule (environ 60 éléments par heure).

Les éléments ainsi produits sont utilisables en construction quelques minutes après leur démoulage, et ils sont montés en étant posés les uns sur les autres, sans joints, grâce à leur grande précision dimensionnelle. Ils sont solidarisés les uns aux autres en quelques minutes par coulée d'un plâtre liquide entre les éléments, de façon connue.

Les éléments de construction selon l'invention peuvent avoir une forme et des dimensions correspondant à celle des parpaings classiques en ciment. Ils peuvent aussi avoir des formes et des dimensions différentes, en fonction de leur destination. On peut notamment former ainsi des poutres, des lintaux, des dalles, des panneaux, etc.

## Revendications

1. Procédé de fabrication d'un élément de construction à base de plâtre, consistant à placer au moins du plâtre et de l'eau dans un moule (10) à la forme de l'élément à obtenir, à comprimer le mélange plâtre et eau dans le moule, et à démouler l'élément obtenu, **caractérisé en ce que** la quantité d'eau dans le mélange est sensiblement égale au double de la quantité d'eau nécessaire à la cristallisation du plâtre à la pression atmosphérique, et la pression appliquée au mélange dans le moule est au moins égale à une valeur seuil à partir de laquelle on empêche la cristallisation du plâtre, le procédé consistant ensuite à provoquer la cristallisation rapide du plâtre par diminution de la pression appliquée au mélange.

2. Procédé selon la revendication 1, **caractérisé en ce que** la quantité d'eau dans le mélange est de 35 à 40 parts en poids d'eau pour 100 parts en poids de plâtre lorsque la valeur seuil de la compression est d'environ 150 bars.

3. Procédé selon la revendication 1 ou 2, **caractérisé en ce que** la compression du mélange dans le moule comprend une étape de tassement (30) d'une durée de 10 à 15 secondes et une étape (32) de compression à la valeur seuil d'une durée de 20 à 30 secondes.

4. Procédé selon la revendication 1, 2 ou 3, **caractérisé en ce qu'**il consiste à provoquer la cristallisation du plâtre dans le mélange par annulation de la compression du mélange.

5. Procédé selon l'une des revendications 1 à 4 **caractérisé en ce qu'**il consiste à provoquer la cristallisation du plâtre dans le mélange par démoulage de l'élément résultant de la compression: du mélange dans le moule (10).

6. Procédé selon l'une des revendications précédentes, **caractérisé en ce qu'**il consiste à laisser s'opérer la cristallisation du plâtre dans l'élément à l'extérieur du moule (10).

7. Procédé selon l'une des revendications précédentes, **caractérisé en ce qu'**il consiste à comprimer initialement le mélange dans le moule (10) pour réduire les vides dans le mélange à une valeur minimale ou voisine d'un minimum, puis à augmenter progressivement la pression appliquée au mélange au moins jusqu'à la valeur limite précitée.

8. Procédé selon l'une des revendications précédentes, **caractérisé en ce que** le mélange dans le moule comprend une charge, par exemple granulaire.

9. Procédé selon la revendication 8, **caractérisé en ce que** la charge est chimiquement inerte par rapport au plâtre.

10. Procédé selon la revendication 8, **caractérisé en ce que** la charge est non inerte chimiquement par rapport au plâtre.

11. Procédé selon l'une des revendications précédentes, **caractérisé en ce que** le mélange dans le moule (10) comprend un fluidifiant.

12. Procédé selon la revendication 11, **caractérisé en ce que** le fluidifiant est un défloculant, tel par exemple que la mélamine.

13. Procédé selon l'une des revendications précédentes, **caractérisé en ce que** la valeur seuil précitée de la pression augmente avec la température et varie de 100 à 150 bars environ quand la température passe de 15 à 20°C environ.

14. Procédé selon l'une des revendications précédentes, **caractérisé en ce que** l'application au mélange dans le moule d'une pression au moins égale à la valeur limite précitée est réalisée par enfoncement dans le mélange, à l'intérieur du moule, d'au moins un élément à section transversale réduite par rapport à la section transversale correspondante de la cavité de moulage, cet élément comprenant par exemple une tige cylindrique guidée en translation à étanchéité dans un orifice d'une paroi du moule et à laquelle on applique une poussée axiale pour l'enfoncer dans le mélange.

## Claims

1. A method for manufacturing a building element based on plaster, consisting of placing at least plaster and water in a mold (10) in the shape of the element to be obtained, compressing the mixture of plaster and water into the mold and unmolding the obtained element, **characterized in that** the quantity of water in the mixture is substantially equal to twice the quantity of water necessary for crystallization of the plaster at atmospheric pressure and the pressure applied to the mixture in the mold is at least equal to a threshold value beyond which plaster crystallization is prevented, the method then consisting of causing rapid crystallization of the plaster by reducing the pressure applied to the mixture.

2. A method according to claim 1, **characterized in that** the quantity of water in the mixture is 35 to 40 parts by weight of water per 100 parts by weight of plaster when the threshold compression value is about 150 bars.

3. A method according to claim 1 or claim 2, **characterized in that** compressing the mixture in the mold comprises a step (30) for packing the mixture into the mold, having a duration of 10 to 15 seconds, and a step (32) for compressing at the threshold value, having a duration of 20 to 30 seconds.

4. A method according to claim 1, claim 2 or claim 3, **characterized in that** it consists of causing crystallization of the plaster in the mixture by ceasing compression of the mixture.

5. A method according to one of claims 1 to 4, **characterized in that** it consists of causing crystallization of the plaster in the mixture by unmolding the element resulting from compression of the mixture into the mold (10).

6. A method according to one of the preceding claims, **characterized in that** it consists of crystallizing the plaster in the element outside the mold (10).

7. A method according to one of the preceding claims, **characterized in that** it consists of initially compressing the mixture in the mold (10) to reduce voids in the mixture to a minimum value or close to a minimum, then increasing the pressure applied to the mixture to at least said threshold value.

8. A method according to one of the preceding claims, **characterized in that** the mixture in the mold comprises a filler, for example a granular filler.

9. A method according to claim 8, **characterized in that** the filler is chemically inert with respect to the plaster.

10. A method according to claim 8, **characterized in that** the filler is not chemically inert with respect to the plaster.

11. A method according to one of the preceding claims, **characterized in that** the mixture in the mold (10) comprises a fluidifier.

12. A method according to claim 10, **characterized in that** the fluidifier is a deflocculating agent such as melamine.

13. A method according to one of the preceding claims, **characterized in that** said threshold value for the pressure increases with temperature and is in the range from about 100 to 150 bars when the temperature passes from about 15°C to 20°C.

14. A method according to one of the preceding claims, **characterized in that** application to the mixture in the mold of a pressure at least equal to that of said limiting value is accomplished by driving at least one element with a reduced cross section with respect to the corresponding cross section of the mold cavity into the mixture in the mold, said element comprising, for example, a cylindrical rod guided in translation and sealingly mounted in an orifice of one wall of the mold and to which an axial thrust is applied to drive it into the mixture.

## Patentansprüche

1. Verfahren zur Herstellung eines Bauelements auf Basis von Gips, das darin besteht, wenigstens Gips und Wasser in eine Form (10) zu geben, welche die Form des zu erzielenden Elements hat, das Gips-Wasser-Gemisch in der Form zu verdichten und das erzielte Element zu entformen,
**dadurch gekennzeichnet, dass** die Wassermenge in dem Gemisch im Wesentlichen dem Doppelten der für die Kristallisation des Gipses bei Atmosphärendruck erforderlichen Wassermenge entspricht, und der auf das Gemisch in der Form ausgeübte Druck wenigstens einem Grenzwert entspricht, ab dem die Kristallisation des Gipses verhindert wird, wobei das Verfahren anschließend darin besteht, die rasche Kristallisation des Gipses durch Verringerung des auf das Gemisch ausgeübten Drucks zu bewirken.

2. Verfahren nach Anspruch 1,
**dadurch gekennzeichnet, dass** die Wassermenge in dem Gemisch 35 bis 40 Gewichtsanteile Wasser pro 100 Gewichtsanteilen Gips beträgt, wenn der Grenzwert der Verdichtung etwa 150 bar beträgt.

3. Verfahren nach Anspruch 1 oder 2,
**dadurch gekennzeichnet, dass** die Verdichtung des Gemisches in der Form eine Setzphase (30) für eine Dauer von 10 bis 15 Sekunden und eine Verdichtungsphase (32) mit dem Grenzwert für eine Dauer von 20 bis 30 Sekunden umfasst.

4. Verfahren nach Anspruch 1, 2 oder 3,
**dadurch gekennzeichnet, dass** es umfasst, die Kristallisation des Gipses in dem Gemisch durch einen Wegfall der Verdichtung des Gemisches zu bewirken.

5. Verfahren nach einem der Ansprüche 1 bis 4,
**dadurch gekennzeichnet, dass** es umfasst, die Kristallisation des Gipses in dem Gemisch durch Entformung des aus der Verdichtung des Gemisches in der Form (10) resultierenden Elements zu bewirken.

6. Verfahren nach einem der vorhergehenden Ansprüche,
**dadurch gekennzeichnet, dass** es umfasst, die Kristallisation des Gipses in dem Element sich außerhalb der Form (10) vollziehen zu lassen.

7. Verfahren nach einem der vorhergehenden Ansprüche,
**dadurch gekennzeichnet, dass** es umfasst, das Gemisch zur Reduzierung der Hohlräume in dem Gemisch zunächst bei einem Mindestwert oder nahe einem Minimum in der Form (10) zu verdichten und dann den auf das Gemisch ausgeübten Druck allmählich wenigstens bis zu dem vorstehend genannten Grenzwert zu erhöhen.

8. Verfahren nach einem der vorhergehenden Ansprüche,
**dadurch gekennzeichnet, dass** das Gemisch in der Form einen beispielsweise kornförmigen Füllstoff umfasst.

9. Verfahren nach Anspruch 8,
**dadurch gekennzeichnet, dass** der Füllstoff bezüglich des Gipses chemisch inert ist.

10. Verfahren nach Anspruch 8,
**dadurch gekennzeichnet, dass** der Füllstoff bezüglich des Gipses chemisch nicht inert ist.

11. Verfahren nach einem der vorhergehenden Ansprüche,
**dadurch gekennzeichnet, dass** das Gemisch in der Form (10) ein Verflüssigungsmittel enthält.

12. Verfahren nach Anspruch 11,
**dadurch gekennzeichnet, dass** das Verflüssigungsmittel ein Entflockungsmittel ist, zum Beispiel Melamin.

13. Verfahren nach einem der vorhergehenden Ansprüche,
**dadurch gekennzeichnet, dass** der vorstehend genannte Grenzwert des Drucks mit der Temperatur steigt und sich ungefähr von 100 auf 150 bar ändert, wenn die Temperatur ungefähr von 15 auf 20 °C steigt.

14. Verfahren nach einem der vorhergehenden Ansprüche,
**dadurch gekennzeichnet, dass** die Ausübung eines wenigstens dem vorstehend genannten Grenzwert entsprechenden Drucks auf das Gemisch in der Form durch Eindrücken wenigstens eines Elements in das Gemisch innen in die Form erfolgt, dessen Querschnitt gegenüber dem entsprechenden Querschnitt der Formkavität geringer ist, wobei dieses Element zum Beispiel eine zylindrische Stange umfasst, die translatorisch in einer Öffnung einer Wand der Form dicht geführt ist und auf die axial ein Druck ausgeübt wird, um sie in das Gemisch einzudrücken.
